# EUROPEAN PATENT SPECIFICATION

(11) **EP 4 174 336 B1**
(45) Date of publication and mention of the grant of the patent: **04.02.2026**
(21) Application number: 21834140.2
(22) Date of filing: 22.06.2021
(51) Int. Cl.: A47H 5/032, F16D 41/061, F16D 41/066

(54) **CLUTCH, MOTOR DEVICE, AND CURTAIN CONTROL DEVICE**
KUPPLUNG, MOTORVORRICHTUNG UND VORHANGSTEUERVORRICHTUNG
EMBRAYAGE, DISPOSITIF MOTEUR ET DISPOSITIF DE COMMANDE DE RIDEAU

(30) Priority: 29.06.2020 CN 202010601197
(43) Date of publication of application: 03.05.2023
(73) Proprietor: Ningbo Sunfree Motor Technology Company Limited, Ningbo City, Zhejiang 315145 (CN)
(72) Inventor: ZHOU, Yongqiang, Ningbo, Zhejiang 315145 (CN); TAN, Baoguo, Ningbo, Zhejiang 315145 (CN)
(74) Representative: Cabinet Chaillot
(86) International application number: PCT/CN2021/101583
(87) International publication number: WO 2022/001757

(56) References cited:
- CN-A- 111 664 200
- CN-U- 202 681 559
- CN-U- 203 770 471
- CN-U- 207 609 699
- CN-U- 208 590 841
- CN-U- 212 479 956
- CN-Y- 2 845 634
- KR-A- 20190 089 465
- US-A- 6 076 592
- US-B1- 9 816 571

## Description

### Technical Field

The present disclosure relates to the technical field of clutch control technologies, and in particular to a clutch, a motor device and a curtain control device.

### Background

A clutch, as a basic component in mechanical transmission of mechatronics, usually implements engaging and disengaging functions by magnetic disengagement. The existing clutch mainly implements engaging and disengaging functions based on electromagnetic principle or magnetic component, especially a mechanical clutch mainly implements engaging and disengaging functions with magnetic beads. In this way, the clutch has a relatively simple structure, and magnetism is easier to control.

However, a clutch implementing engaging and disengaging functions with an electromagnetic device has a large volume difficult to shrink, and the clutch implementing engaging and disengaging functions with a magnetic component has a problem of demagnetization of the magnetic component.

US 6 076 592 A discloses a clutch, comprising a drive force receiving part, a clutch controlling part which is disposed at a side of the drive force receiving part, wherein the clutch controlling part comprises a first control piece, connected to the drive force receiving part, and a first direction driving position and a first direction disengaging position connected to the first direction driving position are disposed at a side of the first control piece away from the drive force receiving part; a clutch piece, located at the first direction driving position or the first direction disengaging position; and a second control piece, sleeved around the first control piece and the clutch piece; wherein the clutch further comprises a drive force outputting part, which is disposed at a side of the clutch controlling part away from the drive force receiving part and has a drive force transmission member; when the clutch piece is located at the first direction driving position, the clutch piece is engaged with the drive force transmission member; and when the clutch piece is located at the first direction disengaging position, the clutch piece is disengaged from the drive force transmission member; wherein the first control piece is of a cylindrical structure; a guide position is disposed at an inner side of the second control piece close to the first control piece; a second direction driving position corresponding to the first direction driving position, a second direction disengaging position connected to the second direction driving position and a transfer channel communicating the first direction driving position with the second direction driving position are disposed at the side of the first control piece away from the drive force receiving part; wherein the clutch piece is switchably located at the first direction driving position or the second direction driving position through the transfer channel.

### Summary

The present invention provides a clutch, a motor device and a curtain control device to effectively solve the problems resulting from the use of magnetic separation in realizing engaging and disengaging functions of an existing clutch.

According to an aspect of the present invention, provided is, according to claim 1, a clutch comprising a drive force receiving part, a clutch controlling part and a drive force outputting part. The clutch controlling part is disposed at a side of the drive force receiving part, and comprises a first control piece, connected to the drive force receiving part, and a first direction driving position and a first direction disengaging position connected to the first direction driving position are disposed at a side of the first control piece away from the drive force receiving part; a clutch piece, located at the first direction driving position or the first direction disengaging position; and a second control piece, sleeved around the first control piece and the clutch piece. The drive force outputting part is disposed at a side of the clutch controlling part away from the drive force receiving part and has a drive force transmission member. When the clutch piece is located at the first direction driving position, the clutch piece is engaged with the drive force transmission member, and when the clutch piece is located at the first direction disengaging position, the clutch piece is disengaged from the drive force transmission member.

A second direction driving position corresponding to the first direction driving position, a second direction disengaging position connected to the second direction driving position and a transfer channel communicating the first direction driving position with the second direction driving position are also disposed at the side of the first control piece away from the drive force receiving part. The clutch piece is switchably located at the first direction driving position or the second direction driving position via the transfer channel.

A guide position is disposed at an inner side of the second control piece close to the first control piece; when the clutch piece is switchably located at the first direction driving position or the second direction driving position via the transfer channel, the clutch piece is sandwiched between the guide position and the transfer channel.

In an embodiment of the present invention, a switching position is disposed at a side of the first control piece close to the drive force receiving part, and the switching position is disposed at the transfer channel; when the clutch piece is switchably located at the first direction driving position or the second direction driving position via the transfer channel, the clutch piece passes through the switching position.

In an embodiment of the present invention, a first matching position is disposed at a position of the drive force transmission member corresponding to the first direction driving position, and a second matching position is disposed at a position of the drive force transmission member corresponding to the second direction driving position; when the drive force receiving part receives a drive force in a first direction, the clutch piece is sandwiched between the first direction driving position and the first matching position; when the drive force receiving part receives a drive force in a second direction opposite to the first direction, the clutch piece is sandwiched between the second direction driving position and the second matching position.

In an embodiment of the present invention, a first matching position is disposed at a position of the drive force transmission member corresponding to the first direction driving position; when the clutch piece is engaged with the drive force transmission member, the clutch piece is sandwiched between the first direction driving position and the first matching position.

In an embodiment of the present invention, two or more first direction driving positions and two or more corresponding first direction disengaging positions are disposed at different positions at a side of the first control piece away from the drive force receiving part respectively.

According to the present invention, the first control piece is of a cylindrical structure; the clutch piece is of a spherical structure; the second control piece is rotatably sleeved around the first control piece and the clutch piece.

According to another aspect of the present invention, provided is a motor device comprising the clutch according to any of the above embodiments; and a motor body having a drive shaft connected to the drive force receiving part of the clutch.

According to still another aspect of the present invention, provided is a curtain control device comprising the motor device according to any of the above embodiments; a first wire reel connected to the drive force outputting part of the motor device; a second wire reel; and a curtain control rope wound between the first wire reel and the second wire reel.

In conclusion, the above different aspects of the present invention may have one or more advantages or beneficial effects as follows: i) the clutch piece is switchably located at the first direction driving position and the first direction disengaging position to engage or disengage the clutch piece with or from the drive force transmission member, thus realizing the engaging and disengaging functions; the engaging and disengaging functions are realized in a pure mechanical manner without using a magnetic component, thereby avoiding a problem caused by the magnetic component; ii) the second direction driving position is added based on the first direction driving position, and the clutch piece may be switched between the first direction driving position and the second direction driving position via the transfer channel, so that the clutch can realize the engaging and disengaging functions under the drive force in the first direction (e.g., a clockwise direction) or the second direction (e.g., a counterclockwise direction) respectively; iii) the first matching position and/or the second matching position corresponding to the first direction driving position and/or the second direction driving position respectively are disposed on the drive force transmission member respectively to increase a engaging strength of the clutch piece and the drive force transmission member, so that the clutch can output a drive force more effectively in a case of engagement.

### Brief Description of the Drawings

In order to describe the technical solutions of the present invention more clearly, brief descriptions will be made below to accompanying drawings involved in descriptions of the embodiments. Obviously, the accompanying drawings in the following descriptions are merely some embodiments of the present invention, and other drawings may also be obtained by those of ordinary skill in the art based on these drawings without paying creative work.
FIG. 1 is a structural schematic diagram of a clutch 100 according to a first embodiment of the present invention.
FIG. 2 is an exploded view of the clutch 100 shown in FIG. 1.
FIG. 3 is a structural schematic diagram of a drive force receiving part 10 and a first control piece 30 shown in FIG. 2.
FIG. 4 is a structural schematic diagram of placing clutch pieces 50 shown in FIG. 2 at second direction driving positions 33 respectively.
FIG. 5 is a structural schematic diagram of placing clutch pieces 50 shown in FIG. 2 at second direction disengaging positions 34 respectively.
FIG. 6 is a structural schematic diagram of a second control piece 40 shown in FIG. 2.
FIG. 7 is a structural schematic diagram of a motor device 200 according to a second embodiment of the present invention.
FIG. 8 is another structural schematic diagram of the motor device 200 according to the second embodiment of the present invention.
FIG. 9 is a structural schematic diagram of a curtain control device 300 according to a third embodiment of the present invention.

Reference numerals of the major components in the drawings are described as follows:
100-clutch; 10-drive force receiving part; 11-drive force receiving piece; 12-first limiting position; 20-clutch controlling part; 30-first control piece; 31-first direction driving position; 32-first direction disengaging position; 33-second direction driving position; 34-second direction disengaging position; 35-switching position; 36-transfer channel; 40-second control piece; 41-guide position; 42-second limiting position; 50-clutch piece; 60-drive force outputting part; 61-output connection position; 62-drive force transmission member; 63-first matching position; 64-second matching position; 65-drive force output shaft; 200-motor device; 210-motor body; 211-drive shaft; 220-speed reducer; 300-curtain control device; 310-first wire reel; 320-second wire reel; and 330-curtain control rope.

### Embodiments

The technical solutions in the embodiments of the present invention will be fully and clearly described below in combination with the accompanying drawings involved in the embodiments of the present invention.

### Embodiment One

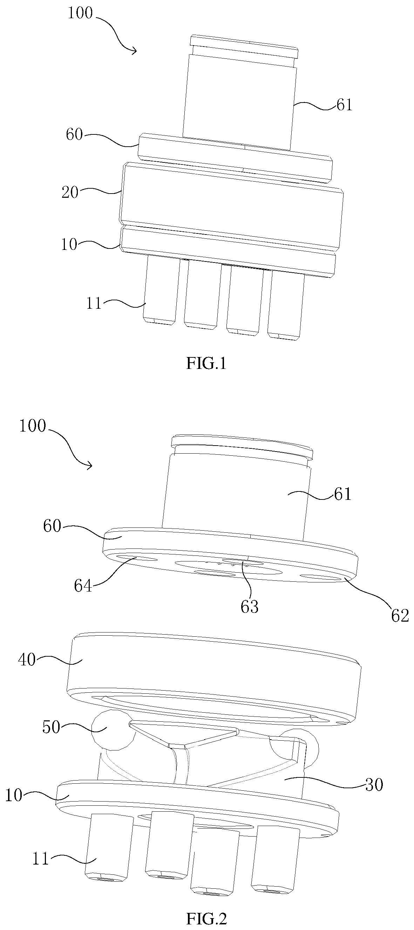

FIG. 1 is a structural schematic diagram of a clutch according to a first embodiment of the present invention. The clutch 100 comprises, for example, a drive force receiving part 10, a drive force outputting part 60 and a clutch controlling part 20 sandwiched between the drive force receiving part 10 and the drive force outputting part 60.

A drive force receiving piece 11 for connecting a motor drive shaft is disposed at a side of the drive force receiving part 10 away from the clutch controlling part 20; an output connection position 61 is disposed at a side of the drive force outputting part 60 away from the clutch controlling part 20 to output a drive force and connect with another rotary shaft or rotary disk. Specifically, as shown in FIG. 2, the clutch controlling part 20 comprises, for example, a first control piece 30. The first control piece 30 is connected to the drive force receiving part 10 and located between the drive force receiving part 10 and the drive force outputting part 60; a first direction driving position 31 and a first direction disengaging position 32 connected to the first direction driving position 31 are disposed at a side of the first control piece 30 close to the drive force outputting part 60 (that is, a side away from the drive force receiving part 10). For example, the first control piece 30 may be of a cylindrical structure; further, when the first control piece 30 has a large diameter, two or more first direction driving positions 31 and two or more corresponding first direction disengaging positions 32 are uniformly distributed at a side of the first control piece 30 close to the drive force outputting part 60.

The clutch controlling part 20 further comprises, for example, a clutch piece 50 and a second control piece 40. The clutch piece 50 is disposed at the first direction driving position 31 or the first direction disengaging position 32; the second control piece 40 is sleeved around the first control piece 30 and the clutch piece 50 to ensure the clutch piece 50 is located at the first direction driving position 31 or the first direction disengaging position 32, thus preventing the clutch piece 50 from being separated from the first direction driving position 31 or the first direction disengaging position 32.

A drive force transmission member 62 is also disposed at a side of the drive force outputting part 60 close to the clutch controlling part 20. When the clutch piece 50 is located at the first direction driving position 31, the drive force transmission member 62 is engaged with the clutch piece 50; when the clutch piece 50 is located at the first direction disengaging position 32, the drive force transmission member 62 is disengaged from the clutch piece 50. For example, the first direction driving position 31 and the first direction disengaging position 32 are both sunken grooves disposed at a side of the first control piece 30 close to the drive force outputting part 60, and a depth of the first direction disengaging position 32 is greater than a depth of the first direction driving position 31. Therefore, when the clutch piece 50 is located at the first direction driving position 31, the drive force transmission member 62, the first control piece 30 and the second control piece 40 cooperate to clamp the clutch piece 50 at the first direction driving position 31; when the clutch piece 50 is located at the first direction disengaging position 32, there is a gap between the drive force transmission member 62 and the clutch piece 50, that is, the drive force transmission member 62 is not in contact with the clutch piece 50.

Preferably, a first matching position 63 is disposed at a position of the drive force transmission member 62 corresponding to the first direction driving position 31. When the clutch piece 50 is located at the first direction driving position 31, the clutch piece 50 is clamped between the first direction driving position 31 and the first matching position 63. Preferably, for example, the clutch piece 50 may be of a spherical structure, and the first matching position 63 may be a concave arc-shaped groove matched with the spherical structure.

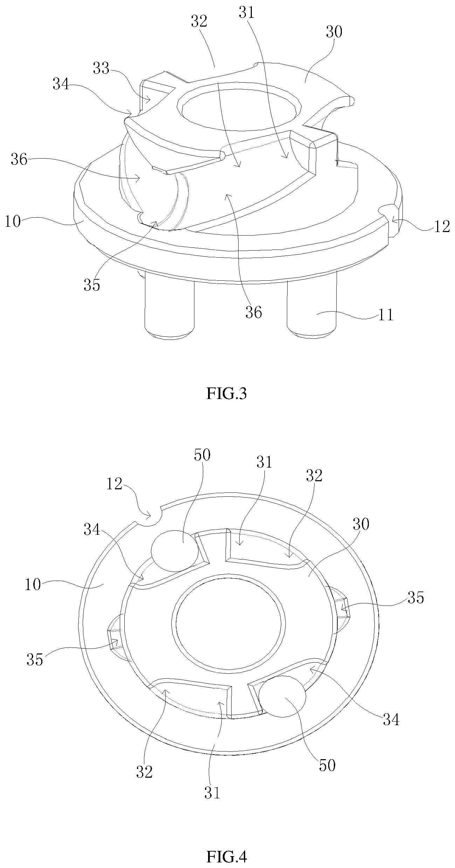

As shown in FIG. 3, a second direction driving position 33 and a second direction disengaging position 34 connected to the second direction driving position 33 are also disposed at a side of the first control piece 30 away from the drive force receiving part 10, and a transfer channel 36 communicating the first direction driving position 31 with the second direction driving position 33 is also disposed on the first control piece 30. The clutch piece 50 may move in the transfer channel 36, and move from the first direction driving position 31 to the second direction driving position 33. Certainly, the clutch piece 50 may also move from the second direction driving position 33 to the first direction driving position 31. For example, the transfer channel 36 may be a groove opened at a side wall of the first control piece 30, and the first direction driving position 31 and the second direction driving position 33 are opened at a connection of the side wall of the first control piece 30 and a side of the first control piece 30 close to the drive force outputting part 60 respectively.

Further, a switching position 35 is also disposed on the transfer channel 36, and located at a side of the first control piece 30 close to the drive force receiving part 10. Certainly, the switching position 35 may also be disposed at a connection of the first control piece 30 and the drive force receiving part 10. For example, the first direction driving position 31, the first direction disengaging position 32, the second direction driving position 33 and the second direction disengaging position 34 are disposed at a side of the first control piece 30 close to the drive force outputting part 60 respectively, whereas the switching position 35 is disposed at a side of the first control piece 30 close to the drive force receiving part 10. Certainly, the first direction driving position 31, the first direction disengaging position 32, the second direction driving position 33 and the second direction disengaging position 34 may be located at different positions of the transfer channel 36 respectively, and the first direction disengaging position 32 is located between the first direction driving position 31 and the switching position 35 and the second direction disengaging position 34 is located between the second direction driving position 33 and the switching position 35. In this case, depths of the sunken grooves of the first direction disengaging position 32 and the second direction disengaging position 34 at the side of the first control piece 30 close to the drive force outputting part 60 are greater than those of the first direction driving position 31 and the second direction driving position 33 respectively.

Certainly, two or more opposing first direction driving positions 31 and second direction driving positions 33 and two or more corresponding transfer channels 36 may be disposed on the first control piece 30, and two or more clutch pieces 50 may be disposed at the clutch controlling part 20 at the same time; specifically, one clutch piece 50 corresponds to a pair of first direction driving position 31 and second direction driving position 33.

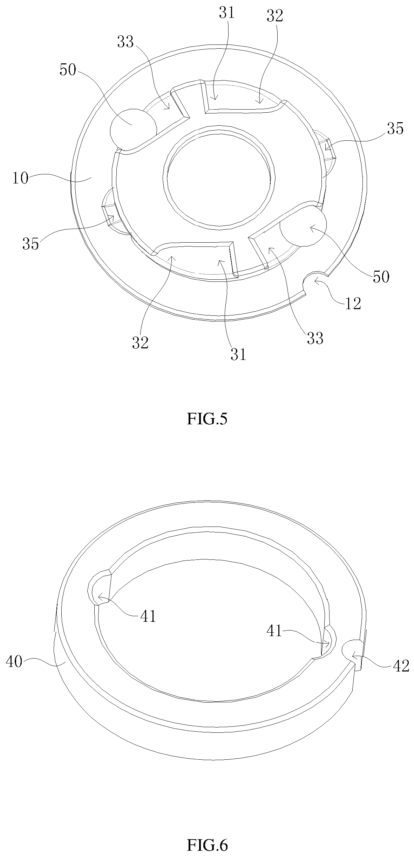

For example, the side of the first controlling piece 30 close to the drive force outputting part 60 may be sized such that two first direction driving positions 31 and two first direction disengaging positions 32 connected with the two first direction driving positions respectively are disposed. Further, two second direction driving positions 33 corresponding to the two first direction driving positions 31 respectively and two second direction disengaging positions 34 connected with the two second direction driving positions 33 respectively may also be disposed on the first control piece 30. As shown in FIG. 4 and FIG. 5, the first control piece 30 is of a cylindrical structure; one first direction driving position 31, one first direction disengaging position 32, one second direction driving position 33 and one second direction disengaging position 34 are disposed in a half region of a side of the first control piece 30 close to the drive force outputting part 60; one first direction driving position 31, one first direction disengaging position 32, one second direction driving position 33 and one second direction disengaging position 34 are also disposed in the other half region of the side of the first control piece 30 close to the drive force outputting part 60. In FIG. 4, two clutch pieces 50 are located at two second direction driving positions 33 respectively; in FIG. 5, two clutch pieces 50 are located at two second direction disengaging positions 34 respectively.

Further, as shown in FIG. 6, the second control piece 40 may be of a cylindrical structure matched with the first control piece 30. The second control piece 40 may be sleeved around the first control piece 30 and the clutch piece 50, and may be rotatable relative to the first control piece 30 and the clutch piece 50. Specifically, a guide position 41 is disposed at an inner side of the second control piece 40 close to the first control piece 30, and the guide position 41 is matched with the transfer channel 36, so that the clutch piece 50 may move in the transfer channel 36. Certainly, when a plurality of, for example, two transfer channels 36 are disposed on the first control piece 30, a plurality of, for example, two guide positions 41 may be correspondingly disposed on the second control piece 40.

Further, to ensure the second control piece 40 and the first control piece 30 are correctly matched and mounted, a first limiting position 12 may be disposed at a side of the drive force receiving part 10, and a second limiting position 42 may be correspondingly disposed at an outer side of the second control piece 40 away from the first control piece 30. When the second control piece 40 is sleeved around the first control piece 30 and the clutch piece 50 and the second limiting position 42 corresponds to the first limiting position 12, the second control piece 40 is correctly sleeved on the first control piece 30.

To understand the embodiment more clearly, the specific implementation process of the clutch in the embodiment will be described in detail below.

For example, the drive force receiving part 10 receives a drive force and drives the drive force outputting part 60 to output the drive force through the clutch controlling part 20 in the following process.

On the one hand, for example, when the drive force receiving part 10 receives a drive force in a first direction (a counterclockwise direction) and rotates, the first control piece 30 is also rotated along the first direction under the drive of the drive force receiving part 10; at this time, the clutch piece 50 is clamped among the guide position 41, the first direction driving position 31 and the first matching position 63; further, under the matching action of the above three components, the clutch piece 50 is fixed at the first direction driving position 31, and can transmit the drive force to the drive force transmission member 62 through the first matching position 63, so that the drive force outputting part 60 rotates along the first direction.

On the other hand, when the drive force receiving part 10 receives a drive force in a second direction (a clockwise direction), the clutch piece 50 is clamped among the guide position 41, the second direction driving position 33 and the second matching position 64; further, under the matching action of the above three components, the clutch piece 50 is fixed at the second direction driving position 33, and can transmit the drive force to the drive force transmission member 62 through the second matching position 64, so as to drive the drive force outputting part 60 to rotate along the second direction.

For example, when the drive force receiving part 10 receives the drive force and drives the drive force outputting part 60 to output the drive force through the clutch controlling part 20, the clutch controlling part 20 may be disengaged from the drive force outputting part 60 to stop outputting the drive force in the following process.

When the clutch piece 50 is located at the first direction driving position 31 and drives the drive force outputting part 60 to output the drive force in the first direction, the drive force receiving part 10 stops receiving the drive force in the first direction, and rotates a certain distance along the second direction opposite to the first direction; at this time, the first control piece 30 also rotates a certain distance along the second direction. In this case, the clutch piece 50 moves to the first direction disengaging position 32 relative to the first control piece 30, thereby realizing disengagement of the clutch controlling part 20 from the drive force outputting part 60. Certainly, when the clutch piece 50 is located at the second direction driving position 33 and drives the drive force outputting part 60 to output the drive force in the second direction, the process of disengaging the clutch controlling part 20 from the drive force outputting part 60 is similar to the above process, and thus is not repeated herein.

Certainly, the process of disengaging the clutch controlling part 20 from the drive force outputting part 60 may also be realized without receiving a drive force in a reverse direction by the drive force receiving part 10. For example, when the drive force receiving part 10 stops receiving the drive force in the first direction (or the second direction), the second control piece 40 is rotated along the second direction (or the first direction) to drive the clutch piece 50 to move to the corresponding disengaging position through the guide position 41, which will not be repeated herein.

For example, when the drive force receiving part 10 receives the drive force in the first direction and drives the drive force outputting part 60 to output the drive force in the first direction through the clutch controlling part 20, the drive force receiving part 10 receives the drive force in the second direction opposite to the first direction and drives the drive force outputting part 60 to output the drive force in the second direction through the clutch controlling part 20 in the following process.

When the clutch piece 50 is located at the first direction driving position 31, the drive force receiving part 10 drives the drive force outputting part 60 to output the drive force in the first direction through the clutch controlling part 20. When the drive force receiving part 10 stops receiving the drive force in the first direction and receives the drive force in the second direction opposite to the first direction, the drive force receiving part 10 drives the first control piece 30 to rotate along the second direction opposite to the first direction. Thus, the first control piece 30 rotates relative to the second control piece 40 and the second control piece 40 moves the clutch piece 50 to the second direction driving position 33 along the transfer channel 36 by use of the guide position 41. Therefore, after the drive force receiving part 10 switches to receive the drive force in the second direction, the drive force outputting part 60 is driven by the clutch controlling part 20 to output the drive force in the second direction. Certainly, the process in which the drive force receiving part 10 switches to receiving the drive force in the first direction from receiving the drive force in the second direction is same as the above process, and thus is not repeated herein.

### Embodiment Two

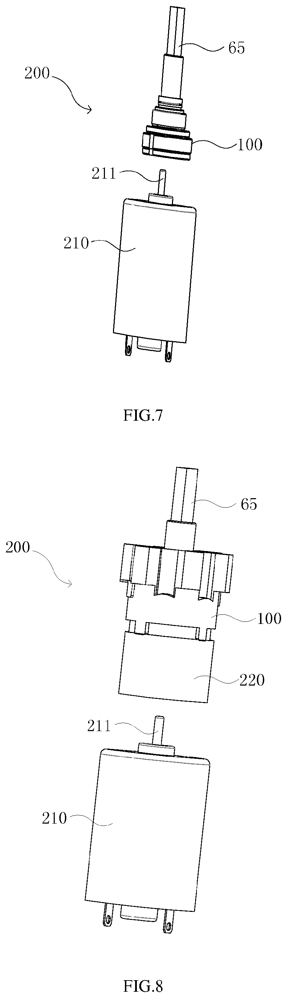

FIG. 7 illustrates a motor device according to a second embodiment of the present invention. The motor device 200 comprises, for example, the clutch 100 according to the first embodiment and a motor body 210 connected to the clutch 100.

Specifically, the motor body 210 has a drive shaft 211 for outputting a drive force, and the drive shaft 211 is connected to the drive force receiving part 10 of the clutch 100. For example, the drive force receiving piece 11 disposed on the drive force receiving part 10 may be a connecting shaft hole, and the drive shaft 211 is inserted into the connecting shaft hole to enable the motor body 210 to output a forward or backward drive force to the drive force receiving part 10.

For example, an output connection position 61 may also be disposed at the drive force outputting part 60 of the clutch 100 (refer to FIG. 1 and FIG. 2), and connected to a drive force output shaft 65 to output a drive force. For example, the output connection position 61 may be a connection hole with internal threads, and the drive force output shaft 65 has a threaded connection end matched with the internal threads. Thus, the above purpose can be achieved by inserting the threaded connection end into the connection hole.

As shown in FIG. 8, the motor device 200 further comprises, for example, a speed reducer 220. The speed reducer 220 is connected between the motor body 210 and the clutch 100. Specifically, the speed reducer 220 may be a planetary speed reducer, or another speed reducer, which will not be specified herein.

### Embodiment Three

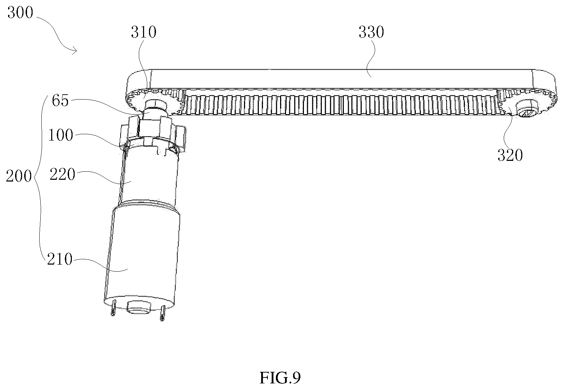

FIG. 9 illustrates a curtain control device according to a third embodiment of the present disclosure. The curtain control device 300 comprises, for example, the motor device 200 according to the second embodiment, a first wire reel 310, a second wire reel 320 and a curtain control rope 330.

Specifically, the first wire reel 310 is connected to the drive force outputting part 60 of the motor device 200 and more specifically, may be connected to the drive force output shaft 65. A certain distance is set between the first wire reel 310 and the second wire reel 320, and the curtain control rope 330 is wound between the first wire reel 310 and the second wire reel 320. For example, the motor device 200 drives the first wire reel 310 to rotate through the drive force outputting part 60, and the first wire reel 310 drives the second wire reel 320 to rotate through the curtain control rope 330.

For example, the first wire reel 310 and the second wire reel 320 may be geared reels, and the curtain control rope 330 may be a geared belt engaged with the geared reels; the motor device 200 drives the geared reel serving as the first wire reel 310 to rotate, and drives the other geared reel engaged with the geared belt to rotate through the geared belt engaged with the geared reel, which will not be repeated herein.

For example, the curtain control device may be used as follows: the first wire reel 310 and the second wire reel 320 are fixed at both ends of a window respectively, the curtain control rope 330 is wound between the first wire reel 310 and the second wire reel 320, and the motor device 200 is connected to the first wire reel 310 or the second wire reel 320; and then, a curtain is hung on the curtain control rope 330.

## Claims

1. A clutch, comprising:
a drive force receiving part (10),
a clutch controlling part (20) which is disposed at a side of the drive force receiving part (10),
wherein the clutch controlling part (20) comprises:
a first control piece (30), connected to the drive force receiving part (10), and a first direction driving position (31) and a first direction disengaging position (32) connected to the first direction driving position (31) are disposed at a side of the first control piece (30) away from the drive force receiving part (10);
a clutch piece (50), located at the first direction driving position (31) or the first direction disengaging position (32); and
a second control piece (40), sleeved around the first control piece (30) and the clutch piece (50);
wherein the clutch further comprises
a drive force outputting part (60), which is disposed at a side of the clutch controlling part (20) away from the drive force receiving part (10) and has a drive force transmission member (62); when the clutch piece (50) is located at the first direction driving position (31), the clutch piece (50) is engaged with the drive force transmission member (62); and when the clutch piece (50) is located at the first direction disengaging position (32), the clutch piece (50) is disengaged from the drive force transmission member (62);
wherein
the second control piece (40) is rotatable relative to the first control piece (30) and the clutch piece (50),
wherein the first control piece (30) is of a cylindrical structure; wherein the clutch piece (50) is of a spherical structure; wherein
a guide position (41) is disposed at an inner side of the second control piece (40) close to the first control piece (30);
wherein a second direction driving position (33) corresponding to the first direction driving position (31), a second direction disengaging position (34) connected to the second direction driving position (33) and a transfer channel (36) communicating the first direction driving position (31) with the second direction driving position (33) are disposed at the side of the first control piece (30) away from the drive force receiving part (10);
wherein the clutch piece (50) is switchably located at the first direction driving position (31) or the second direction driving position (33) through the transfer channel (36);
when the clutch piece (50) is switchably located at the first direction driving position (31) or the second direction driving position (33) through the transfer channel (36), the clutch piece (50) is sandwiched between the guide position (41) and the transfer channel (36).

2. The clutch of claim 1, wherein a switching position (35) is disposed at a side of the first control piece (30) close to the drive force receiving part (10), and the switching position (35) is disposed at the transfer channel (36); when the clutch piece (50) is switchably located at the first direction driving position (31) or the second direction driving position (33) through the transfer channel (36), the clutch piece (50) passes through the switching position (35).

3. The clutch of claim 1, wherein a first matching position (63) is disposed at a position of the drive force transmission member (62) corresponding to the first direction driving position (31), and a second matching position (64) is disposed at a position of the drive force transmission member (62) corresponding to the second direction driving position (33); when the drive force receiving part (10) receives a drive force in a first direction, the clutch piece (50) is sandwiched between the first direction driving position (31) and the first matching position (63); when the drive force receiving part (10) receives a drive force in a second direction opposite to the first direction, the clutch piece (50) is sandwiched between the second direction driving position (33) and the second matching position (64).

4. The clutch of claim 1, wherein a first matching position (63) is disposed at a position of the drive force transmission member (62) corresponding to the first direction driving position (31); when the clutch piece (50) is engaged with the drive force transmission member (62), the clutch piece (50) is sandwiched between the first direction driving position (31) and the first matching position (63).

5. The clutch of claim 1, wherein two or more first direction driving positions (31) and two or more corresponding first direction disengaging positions (32) are disposed at different positions at a side of the first control piece (30) away from the drive force receiving part (10) respectively.

6. A motor device (200), wherein it comprises the clutch of any one of claims 1-5, and a motor body (210) having a drive shaft (211) connected to the drive force receiving part (10) of the clutch.

7. A curtain control device, wherein it comprises the motor device (200) of claim 6, a first wire reel (310) connected to the drive force outputting part (60) of the motor device (200); a second wire reel (320); and a curtain control rope (330) wound between the first wire reel (310) and the second wire reel (320).

## Patentansprüche

1. - Kupplung, umfassend:
ein Antriebskraftaufnahmeteil (10),
ein Kupplungssteuerteil (20), das auf einer Seite des Antriebskraftaufnahmeteils (10) angeordnet ist, wobei das Kupplungssteuerteil (20) Folgendes umfasst:
ein erstes Steuerstück (30), das mit dem Antriebskraftaufnahmeteil (10) verbunden ist, und eine erste Richtungsantriebsposition (31) und eine erste Richtungsausrückposition (32), die mit der ersten Richtungsantriebsposition (31) verbunden ist, auf einer Seite des ersten Steuerstücks (30) weg von dem Antriebskraftaufnahmeteil (10) angeordnet sind;
ein Kupplungsstück (50), das sich an der ersten Richtungsantriebsposition (31) oder an der ersten Richtungsausrückposition (32) befindet; und
ein zweites Steuerstück (40), das um das erste Steuerstück (30) und das Kupplungsstück (50) aufgesteckt ist;
wobei die Kupplung ferner Folgendes umfasst
ein Antriebskraftausgabeteil (60), das auf einer Seite des Kupplungssteuerteils (20) weg von dem Antriebskraftaufnahmeteil (10) angeordnet ist und ein Antriebskraftübertragungselement (62) aufweist;
wenn sich das Kupplungsstück (50) in der ersten Richtungsantriebsposition (31) befindet, das Kupplungsstück (50) mit dem Antriebskraftübertragungselement (62) eingerückt ist; und wenn sich das Kupplungsstück (50) in der ersten Richtungsausrückposition (32) befindet, das Kupplungsstück (50) von dem Antriebskraftübertragungselement (62) ausgerückt ist;
wobei das zweite Steuerstück (40) in Bezug auf das erste Steuerstück (30) und das Kupplungsstück (50) drehbar ist,
wobei das erste Steuerstück (30) von zylindrischer Struktur ist;
wobei das Kupplungsstück (50) von kugelförmiger Struktur ist;
wobei eine Führungsposition (41) auf einer Innenseite des zweiten Steuerstücks (40) nahe dem ersten Steuerstück (30) angeordnet ist;
wobei eine zweite Richtungsantriebsposition (33), die der ersten Richtungsantriebsposition (31) entspricht, eine zweite Richtungsausrückposition (34), die mit der zweiten Richtungsantriebsposition (33) verbunden ist, und ein Übertragungskanal (36), der die erste Richtungsantriebsposition (31) mit der zweiten Richtungsantriebsposition (33) verbindet, auf der Seite des ersten Steuerstücks (30) weg von dem Antriebskraftaufnahmeteil (10) angeordnet sind;
wobei sich das Kupplungsstück (50) durch den Übertragungskanal (36) schaltbar an der ersten Richtungsantriebsposition (31) oder der zweiten Richtungsantriebsposition (33) befindet;
wenn sich das Kupplungsstück (50) durch den Übertragungskanal (36) schaltbar an der ersten Richtungsantriebsposition (31) oder der zweiten Richtungsantriebsposition (33) befindet, das Kupplungsstück (50) zwischen der Führungsposition (41) und dem Übertragungskanal (36) eingespannt ist.

2. - Kupplung nach Anspruch 1, wobei eine Schaltposition (35) auf einer Seite des ersten Steuerstücks (30) nahe dem Antriebskraftaufnahmeteil (10) angeordnet ist und die Schaltposition (35) an dem Übertragungskanal (36) angeordnet ist; wenn das Kupplungsstück (50) durch den Übertragungskanal (36) schaltbar in der ersten Richtungsantriebsposition (31) oder in der zweiten Richtungsantriebsposition (33) angeordnet ist, das Kupplungsstück (50) durch die Schaltposition (35) verläuft.

3. - Kupplung nach Anspruch 1, wobei eine erste Anpassungsposition (63) an einer Position des Antriebskraftübertragungselements (62) angeordnet ist, die der ersten Richtungsantriebsposition (31) entspricht, und eine zweite Anpassungsposition (64) an einer Position des Antriebskraftübertragungselements (62) angeordnet ist, die der zweiten Richtungsantriebsposition (33) entspricht; wenn das Antriebskraftaufnahmeteil (10) eine Antriebskraft in einer ersten Richtung erhält, das Kupplungsstück (50) zwischen der ersten Richtungsantriebsposition (31) und der ersten Anpassungsposition (63) eingespannt ist; wenn das Antriebskraftaufnahmeteil (10) eine Antriebskraft in einer zweiten Richtung entgegengesetzt zu der ersten Richtung erhält, das Kupplungsstück (50) zwischen der zweiten Richtungsantriebsposition (33) und der zweiten Anpassungsposition (64) eingespannt ist.

4. - Kupplung nach Anspruch 1, wobei eine erste Anpassungsposition (63) an einer Position des Antriebskraftübertragungselements (62) angeordnet ist, die der ersten Richtungsantriebsposition (31) entspricht; wenn das Kupplungsstück (50) mit dem Antriebskraftübertragungselement (62) eingerückt ist, das Kupplungsstück (50) zwischen der ersten Richtungsantriebsposition (31) und der ersten Anpassungsposition (63) eingespannt ist.

5. - Kupplung nach Anspruch 1, wobei zwei oder mehrere erste Richtungsantriebspositionen (31) und zwei oder mehrere entsprechende erste Richtungsausrückpositionen (32) jeweils an verschiedenen Positionen auf einer Seite des ersten Steuerstücks (30) weg von dem Antriebskraftaufnahmeteil (10) angeordnet sind.

6. - Motorvorrichtung (200), wobei sie die Kupplung nach einem der Ansprüche 1-5 und einen Motorkörper (210), von dem eine Antriebswelle (211) mit dem Antriebskraftaufnahmeteil (10) der Kupplung verbunden ist, aufweist.

7. - Vorhangsteuervorrichtung, wobei sie die Motorvorrichtung (200) nach Anspruch 6, eine erste Drahtspule (310), die mit dem die Antriebskraftausgabeteil (60) der Motorvorrichtung (200) verbunden ist, eine zweite Drahtspule (320) und ein zwischen der ersten Drahtspule (310) und der zweiten Drahtspule (320) aufgewickeltes Vorhangsteuerungsseil (330) umfasst.

## Revendications

1. - Embrayage, comprenant :
une partie réception de force d'entraînement (10),
une partie commande d'embrayage (20) qui est disposée sur un côté de la partie réception de force d'entraînement (10), la partie commande d'embrayage (20) comprenant :
un premier élément de commande (30), relié à la partie réception de force d'entraînement (10), et une position d'entraînement dans une première direction (31) et une position de désengagement dans la première direction (32) reliée à la position d'entraînement dans la première direction (31) étant disposées sur un côté du premier élément de commande (30) à l'opposé de la partie réception de force d'entraînement (10) ;
un élément d'embrayage (50), situé à la position d'entraînement dans la première direction (31) ou à la position de désengagement dans la première direction (32) ; et
un second élément de commande (40), emmanché autour du premier élément de commande (30) et de l'élément d'embrayage (50) ;
dans lequel l'embrayage comprend en outre
une partie de sortie de force d'entraînement (60), qui est disposée sur un côté de la partie commande d'embrayage (20), à l'opposé de la partie réception de force d'entraînement (10), et a un élément de transmission de force d'entraînement (62) ;
lorsque l'élément d'embrayage (50) est situé à la position d'entraînement dans la première direction (31), l'élément d'embrayage (50) étant engagé avec l'élément de transmission de force d'entraînement (62) ; et lorsque l'élément d'embrayage (50) est situé à la position de désengagement dans la première direction (32), l'élément d'embrayage (50) étant désengagé de l'élément de transmission de force d'entraînement (62) ;
dans lequel le second élément de commande (40) est apte à tourner par rapport au premier élément de commande (30) et à l'élément d'embrayage (50),
dans lequel le premier élément de commande (30) est d'une structure cylindrique ;
dans lequel l'élément d'embrayage (50) est d'une structure sphérique ;
dans lequel une position de guidage (41) est disposée sur un côté interne du second élément de commande (40) à proximité du premier élément de commande (30) ;
dans lequel une position d'entraînement dans une seconde direction (33) correspondant à la position d'entraînement dans la première direction (31), une position de désengagement dans la seconde direction (34) reliée à la position d'entraînement dans la seconde direction (33) et un canal de transfert (36) faisant communiquer la position d'entraînement dans la première direction (31) avec la position d'entraînement dans la seconde direction (33) sont disposés sur le côté du premier élément de commande (30) à l'opposé de la partie réception de force d'entraînement (10) ;
dans lequel l'élément d'embrayage (50) est situé de manière commutable à la position d'entraînement dans la première direction (31) ou à la position d'entraînement dans la seconde direction (33) à travers le canal de transfert (36) ;
lorsque l'élément d'embrayage (50) est situé de manière commutable à la position d'entraînement dans la première direction (31) ou à la position d'entraînement dans la seconde direction (33) à travers le canal de transfert (36), l'élément d'embrayage (50) étant pris en sandwich entre la position de guidage (41) et le canal de transfert (36).

2. - Embrayage selon la revendication 1, dans lequel une position de commutation (35) est disposée sur un côté du premier élément de commande (30) à proximité de la partie réception de force d'entraînement (10), et la position de commutation (35) est disposée sur le canal de transfert (36) ; lorsque l'élément d'embrayage (50) est situé de manière commutable à la position d'entraînement dans la première direction (31) ou à la position d'entraînement dans la seconde direction (33) à travers le canal de transfert (36), l'élément d'embrayage (50) passe par la position de commutation (35).

3. - Embrayage selon la revendication 1, dans lequel une première position d'appariement (63) est disposée à une position de l'élément de transmission de force d'entraînement (62) correspondant à la position d'entraînement dans la première direction (31), et une seconde position d'appariement (64) est disposée à une position de l'élément de transmission de force d'entraînement (62) correspondant à la position d'entraînement dans la seconde direction (33) ; lorsque la partie réception de force d'entraînement (10) reçoit une force d'entraînement dans une première direction, l'élément d'embrayage (50) est pris en sandwich entre la position d'entraînement dans la première direction (31) et la première position d'appariement (63) ; lorsque la partie réception de force d'entraînement (10) reçoit une force d'entraînement dans une seconde direction opposée à la première direction, l'élément d'embrayage (50) est pris en sandwich entre la position d'entraînement dans la seconde direction (33) et la seconde position d'appariement (64).

4. - Embrayage selon la revendication 1, dans lequel une première position d'appariement (63) est disposée à une position de l'élément de transmission de force d'entraînement (62) correspondant à la position d'entraînement dans la première direction (31) ; lorsque l'élément d'embrayage (50) est engagé avec l'élément de transmission de force d'entraînement (62), l'élément d'embrayage (50) est pris en sandwich entre la position d'entraînement dans la première direction (31) et la première position d'appariement (63).

5. - Embrayage selon la revendication 1, dans lequel au moins deux positions d'entraînement dans la première direction (31) et au moins deux positions de désengagement dans la première direction (32) correspondantes sont disposées respectivement à différentes positions sur un côté du premier élément de commande (30) à l'opposé de la partie réception de force d'entraînement (10).

6. - Dispositif moteur (200), dans lequel il comprend l'embrayage selon l'une quelconque des revendications 1 à 5, et un corps de moteur (210) ayant un arbre d'entraînement (211) relié à la partie réception de force d'entraînement (10) de l'embrayage.

7. - Dispositif de commande de rideau, dans lequel il comprend le dispositif moteur (200) selon la revendication 6, une première bobine de fil (310) reliée à la partie de sortie de force d'entraînement (60) du dispositif moteur (200) ; une seconde bobine de fil (320) ; et un câble de commande de rideau (330) enroulé entre la première bobine de fil (310) et la seconde bobine de fil (320).
